# EUROPÄISCHE PATENTSCHRIFT

(11) **EP 0 588 066 B1**
(45) Veröffentlichungstag und Bekanntmachung des Hinweises auf die Patenterteilung: **05.06.1996**
(21) Anmeldenummer: 93112957.1
(22) Anmeldetag: 12.08.1993
(51) Int. Cl.: F16H 7/12

(54) **Spannvorrichtung für Zugmittel**
Belt tensioning device
Dispositif de tension pour courroie

(30) Priorität: 17.09.1992 DE 9212557 U
(43) Veröffentlichungstag der Anmeldung: 23.03.1994
(73) Patentinhaber: JOH. WINKLHOFER & SÖHNE GmbH & Co KG, D-81369 München (DE)
(72) Erfinder: Schulze, Peter, D-85375 Neufahrn (DE)
(74) Vertreter: Grünecker, Kinkeldey, Stockmair & Schwanhäusser Anwaltssozietät

(56) Entgegenhaltungen:
- EP-A- 0 329 855
- EP-A- 0 334 063
- FR-A- 2 510 217
- US-A- 4 190 025
- US-A- 4 976 661

## Beschreibung

Die Erfindung bezieht sich auf eine Spannvorrichtung für Zugmittel, insbesondere Zahnriemen, gemäß dem Oberbegriff von Anspruch 1.

Aus dem Stand der Technik ist eine Spannvorrichtung bekannt, die ein Gehäuse umfaßt, das mit drei Befestigungsstellen versehen ist. Eine der Befestigungsstellen dient als Schwenklager, um das die beiden anderen als Langloch ausgebildeten Befestigungsstellen schwenkbar sind. An dem Gehäuse ist außermittig und schwenkbar eine Spannrolle angeordnet, die mit einem Rückstellhebel versehen ist. Der Rückstellhebel ist mit einem in einer Bohrung des Gehäuses gehalterten Dehnstoff-Arbeitselement verbunden. Um das Zugmittel vorzuspannen, wird die Spannvorrichtung um die schwenkbare Befestigungsstelle geschwenkt und mit der Spannrolle gegen das Zugmittel gedrückt. Das Andrücken der Spannrolle an das Zugmittel erfolgt von Hand und muß unbedingt beim Festziehen der beiden anderen Befestigungsstellen mit einem Drehmomentschlüssel kontrolliert werden. Weiterhin muß der Einbau der bekannten Spannvorrichtung bei einer vorbestimmten Temperatur erfolgen, damit das Drehstoff-Arbeitselement seine vorgeschriebene Ausgangsposition vorweist. Der Einbau dieser Spannvorrichtung kann sich daher schwierig gestalten, da die entsprechenden Ausgangsvoraussetzungen, insbesondere bei Reparaturwerkstätten, nicht immer eingehalten werden können. Die vorzuspannenden Zugmittel werden häufig bei Verbrennungsmotoren als Steuerungsglieder eingesetzt, wodurch sich eine zu schwache oder starke Vorspannung des Zugmittels sehr nachteilig auswirken kann. Insbesondere bei langen Zahnriemen kann aber eine zu geringe Vorspannung zum Überspringen des Zahnriemens und damit zur Zerstörung des Motors führen. Deshalb wurden bislang Zahnriemen über eine bestimmte Größe hinaus im Motorbau auch nicht eingesetzt.

Eine gattungsgemäße Spannvorrichtung ist aus der EP 0 329 855 A1 bekannt. Diese umfaßt eine, über ein in einem Spannergehäuse längsbeweglichen Druckelement an den Zahnriemen andrückbare Spannrolle. Die Anpreßkraft auf das Druckelement wird durch mehrere, wechselsinnig geschichtete Bimetall-Tellerfedern ausgeübt, die sich gegen einen hydraulischen Dämpfungskolben abstützen.

Der Erfindung liegt die Aufgabe zugrunde, eine Spannvorrichtung zu entwickeln, die den Einsatz von langen Zugmitteln, insbesondere langen Zahnriemen, ermöglicht.

Diese Aufgabe wird erfindungsgemäß durch eine Spannvorrichtung gemäß Anspruch 1 gelöst.

Durch den Einsatz eines federgestützten Kolbens, der Bestandteil eines hydraulischen Dämpfungssystems ist, kann eine definierte Vorspannung des Zugmittels erfolgen. Die Befestigungsstellen des Gehäuses können ortsfest angeordnet werden, weil die Vorspannung exakt durch den Federweg festlegbar ist. Außerdem besteht die Möglichkeit, den federgestützten Kolben so anzuordnen, daß ein Dehnstoff-Arbeitselement in einen vorherbestimmten Arbeitsbereich gebracht wird. In diesem Arbeitsbereich stellt dann die Einbautemperatur der Spannvorrichtung nur eine untergeordnete Rolle dar. Aus diesen Gründen ist die erfindungsgemäße Spannvorrichtung besonders für den Einsatz langer Zahnriemen unter veränderlichen Temperaturbedingungen geeignet. Vorteilhaft ist das Dehnstoff-Arbeitselement einseitig am Kolben abgestützt ist. Das Dehnstoff-Arbeitselement hat nun den gleichen Federweg wie der Kolben, wodurch sich das Einstellen des Arbeitsbereiches für das Dehnstoff-Arbeitselement besonders leicht verwirklichen läßt. Ein Ende des Kolbens weist eine Aufnahme auf, die mit einem Spannhebel zwischen dessen Enden gelenkig verbunden ist. Der Spannhebel ist mit seinem ersten Ende schwenkbar am Gehäuse und mit seinem zweiten Ende außermittig, schwenkbar an der Spannrolle angelenkt. Durch die Verwendung des Spannhebels kann die Spannrolle räumlich günstig angeordnet werden. Weiterhin ist durch das gegebene Hebelverhältnis eine bessere Dosierung der Spannkraft möglich. Der Kolben weist in seinem zweiten Ende eine Aufnahme auf, in der das Dehnstoff-Arbeitselement angeordnet ist. Ein Arbeitskolben des Dehnstoff-Arbeitselementes ist mit dem ersten Ende eines Rückstellhebels verbunden. Das zweite Ende des Rückstellhebels ist von dem Anlenkpunkt des Spannhebels beabstandet an der Spannrolle beweglich angeordnet. Die Erfindung zeichnet sich durch enorme Kompaktheit aus. Darüber hinaus wird das Dehnstoff-Arbeitselement zusätzlich durch die Feder gestützt und von dem Hydrauliksystem gedämpft.

In einer weiteren Ausführungsform ist der Kolben an einem Ende durch eine in einem zylindrischen Hohlraum des Kolbens geführten Druckfeder gegenüber dem Gehäuse abgestützt. Diese Lösung ist besonders einfach und ein weiteres Befestigen der Druckfeder am Kolben ist nicht erforderlich.

Günstig ist es, wenn eine durch Federkraft mit einer Aufnahme auf den Arbeitskolben des Dehnstoff-Arbeitselements gesetzte Kolbenstange durch einen zylindrischen Ansatz in der Grundbohrung geführt ist. Das an dem Kolben hervorstehende Ende der Kolbenstange wird an dem ersten Ende des Rückstellhebels angelenkt. Hierdurch läßt sich das Dehnstoff-Arbeitselement gänzlich im Kolben versenken und seine Wirkung über eine Kolbenstange übertragen. Die Kolbenstange stellt einen Adapter dar, der mit entsprechenden Verbindungen an dem Rückstellhebel beweglich befestigt werden kann. Weiterhin kann die Aufnahme der Kolbenstange für den Arbeitskolben so gestaltet sein, daß ein Abheben der Kolbenstange erst ab einem bestimmten Arbeitshub des Dehnstoff-Arbeitselements erfolgt. Diese Maßnahme hat eine weitere Auswirkung auf den Arbeitsbereich.

Vorteilhaft ist es, wenn zwischen dem zylindrischen Ansatz und einer Haltebuchse, die mit einem Führungsansatz für die Kolbenstange versehen und in der Bohrung des Kolbens gehaltert ist, eine Anpreßfeder für die Haltestange vorgesehen ist, die die Kolbenstange gegen das Dehnstoff-Arbeitselement drückt. Durch diese Ausführungsform ist ein sicheres Andrücken der Aufnahme der Kolbenstange auf den Arbeitskolben gewährleistet. Durch das Abstützen der Anpreßfeder an der Haltebuchse in der Bohrung des Kolbens übt die Anpreßfeder keine andere Wirkung auf das System aus.

Günstigerweise wird der Kolben mit einer an seiner Außenseite angebrachten und mit dem Spannhebel lösbar verbundenen Öse versehen. Eine einfache Zugänglichkeit der Öse wird durch diese Anordnung erreicht.

In einer bevorzugten Ausführungsform weisen der Spannhebel und das Gehäuse jeweils eine in einer Transportstellung der Spannvorrichtung miteinander verbindbare Haltevorrichtung auf. Die Spannvorrichtung hält somit eine Transport- oder Montagestellung, in der es an seinen Bestimmungsort angeordnet wird. In dieser Stellung ist der Kolben ganz eingefahren. Nach dem Entkoppeln der beiden Haltevorrichtungen fährt der Kolben dann in seine Abeitsstellung aus.

Bevorzugt wird eine Ausführungsform, in der der Kolben wenigstens eine mit Rastnasen versehene Rastfläche am Außenmantel aufweist, in den federgestützte und in der Bohrung gehalterte Rastelemente eingreifen. Die Rastelemente können das Ausfahren des Kolbens freigeben und das Einfahren sperren. Eine einmal erreichte, ausgefahrene Position des Kolbens wird hierdurch nicht mehr aufgegeben. Selbst harte Stöße, die auf den Kolben wirken, reduzieren somit nicht die Spannkraft in gefährlichem Maße.

Bevorzugt wird es, wenn die Rastnasen der Rastflächen und Rastelemente sägezahnförmige Profilierung aufweisen. Eine sägezahnförmige Profilierung ist eine preiswerte und sehr stabile Ausführung einer Sperreinrichtung.

Vorteilhafterweise werden die Rastelemente an ihrem Außenumfang mit einer im Querschnitt U-förmigen Aussparung versehen, in die ein geschlitzter Spannring eingesetzt wird. Der geschlitzte Spannring gewährleistet eine einfache Montage und eine ausreichende Federwirkung für die Rastelemente bei gleichzeitig einfachem Aufbau.

In einer weiteren Ausführungsform werden die Rastnasen in einen erweiterten Absatz der Bohrung eingesetzt und von der Feder gegen eine Distanzbuchse gedruckt. Dabei sind die Rastelemente in geringem Maße in Einfederrichtung mit dem Kolben in geringem Maße bewegbar. Durch diese Maßnahme werden geringe Stöße und Schwingungen über die Feder und das hydraulische Dämpfungssystem aufgefangen, während starke Schwingungen und Stöße von den Rastelementen und Rastflächen aufgefangen werden.

Ein Einfahren des Kolbens in die Transport- oder Montagestellung kann durch eine Ausgestaltung erfolgen, bei der bei gelöster Öse die Rastfläche von den Rastelementen durch Drehen des Kolbens um ca. 90 ^{o} entkoppelt werden. Durch diese Ausgestaltung wird die Montage der Spannvorrichtung erleichtert.

In einer weiteren besonderen Ausführung, für die gesondert Schutz beansprucht wird, weist die Spannvorrichtung, unabhängig von einem Dehnstoff-Arbeitselement, ein geschlossenes Hydrauliksystem auf. Hierzu wird in das Gehäuse ein geschlossener Ölbehälter integriert, der über einen Zulaufkanal und einen Überlaufkanal mit der Bohrung im Gehäuse verbunden ist. Der gesamte Hydraulikkreislauf ist somit in dem Gehäuse der Spannvorrichtung eingebaut. Eine gesonderte Ölzuführung von außen, z.B. ein Druckölanschluß des Motors, ist nicht mehr erforderlich. Die Spannvorrichtung arbeitet hierdurch extrem wartungsfrei bei gleichzeitig kompakter Ausführung.

Bevorzugt wird es, wenn im Zulaufkanal ein Ölfluß in die Bohrung freigebendes Rückstauventil eingebaut ist. Weiterhin ist die Distanzbuchse mit zur Mantelfläche des Kolbens und zur Innenwand der Bohrung korrespondierenden und umlaufenden Dichtungen versehen. Durch das Rückstauventil ist eine genau definierte Flußrichtung des Öles gewährleistet. Die Dichtungen in der Distanzbuchse dichten den Hydraulikkreislauf zur Umgebung ab. Hierzu können einfache O-Ringe eingesetzt werden.

Bevorzugt wird das Rückstauventil unterhalb des zylindrischen Hohlraums angeordnet. Der zylindrische Hohlraum ist somit immer mit Öl gefüllt und hat einerseits eine große Dämpfungswirkung beim Einfehren des Kolbens und andererseits eine große Saugwirkung beim Ausfahren des Kolbens.

In einer weiteren Ausführungsform ist im unteren Teil der Bohrung eine Gleithülse eingesetzt, in der der Kolben mit ölflußzulassendem radialen Spiel geführt ist. Zwischen Gleithülse und Kolben rann sich somit ein optimaler Ölfilm aufbauen, der eine sehr starke verschleißmindernde Wirkung hat.

Im folgenden wird die vorliegende Erfindung anhand eines Ausführungsbeispiels näher erläutert.

Es zeigen:
- Figur 1: ein erfindungsgemäßes Spannelement im Halbschnitt und zur Vereinfachung teilweise in gestrichelter Darstellung,
- Figur 2: eine erste Variante entlang des Schnittes A - A aus Fig. 1 in einer vergrößerten Darstellung und
- Figur 3: eine zweite Variante des Schnittes A - A aus Fig. 1 in vergrößerter Darstellung.

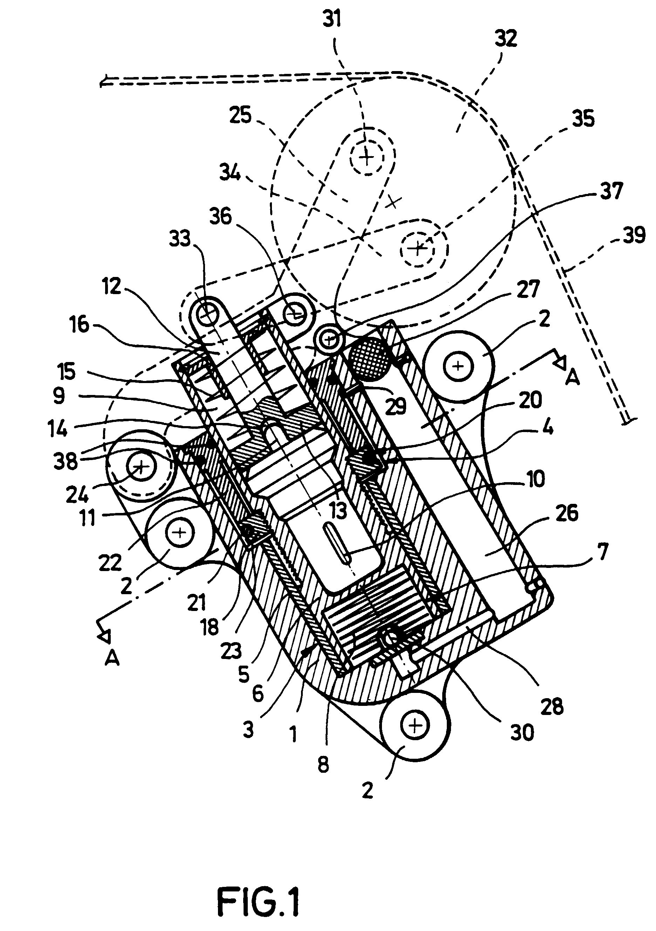

Die in Figur 1 dargestellte Spannvorrichtung umfaßt ein bevorzugt gegossenes Gehäuse 1, das mit hervorstehenden und außen angeordneten Befestigungsstellen 2 versehen ist. Das Gehäuse 1 weist eine zylindrische Bohrung 3 auf. Im oberen Abschnitt der Bohrung 3 befindet sich ein Absatz 4. Im unteren Teil der Bohrung 3 ist eine Gleithülse 5 eingeschoben, die sich vom Grund der Bohrung 3 bis zum Beginn des Absatzes 4 erstreckt.

In die Gleithülse 5 ist ein Kolben 6 eingeschoben. Der Kolben weist an seinem unteren Ende einen zylindrischen Hohlraum 7 auf. Von dem zylindrischen Hohlraum 7 wird eine Druckfeder 8 aufgenommen. Bevorzugt wird als Druckfeder 8 eine Schraubenfeder eingesetzt. In dem gegenüberliegenden Ende des Kolbens 6, welches aus dem Gehäuse 1 hervorsteht, ist eine Grundbohrung 9 eingearbeitet. Der untere Bereich der Grundbohrung 9 ist formgenau einem Dehnstoff-Arbeitselement 10 angepaßt. Das in die Grundbohrung 9 eingesetzte Dehnstoff-Arbeitselement 10 weist mit seinem Arbeitskolben zur Öffnung der Grundbohrung 9. Auf das Dehnstoff-Arbeitselement 10 ist eine Kolbenstange 12 aufgesetzt, die an ihrem unteren Ende mit einem vergrößerten zylindrischen Ansatz 13 versehen ist. In den zylindrischen Ansatz 13 ist eine Aufnahme 14 für den Arbeitskolben 11 angeordnet. Bevorzugterweise liegt der Arbeitskolben 11 im unbetätigten Zustand der Spannvorrichtung nicht am Grund der Aufnahme 14 an. Die Kolbenstange 12 wird durch eine Anpreßfeder 15, die sich an einer Haltebuchse 16 abstützt, mit ihrer Aufnahme 14 auf den Arbeitskolben 11 gedrückt. Die Haltebuchse 16 ist in der Grundbohrung 9 des Kolbens 6, bevorzugt durch einen Sicherungsring, gehaltert.

Die Kolbenstange 12 wird durch die Haltebuchse 16 und durch ihren zylindrischen Ansatz 13 in der Grundbohrung 9 geführt.

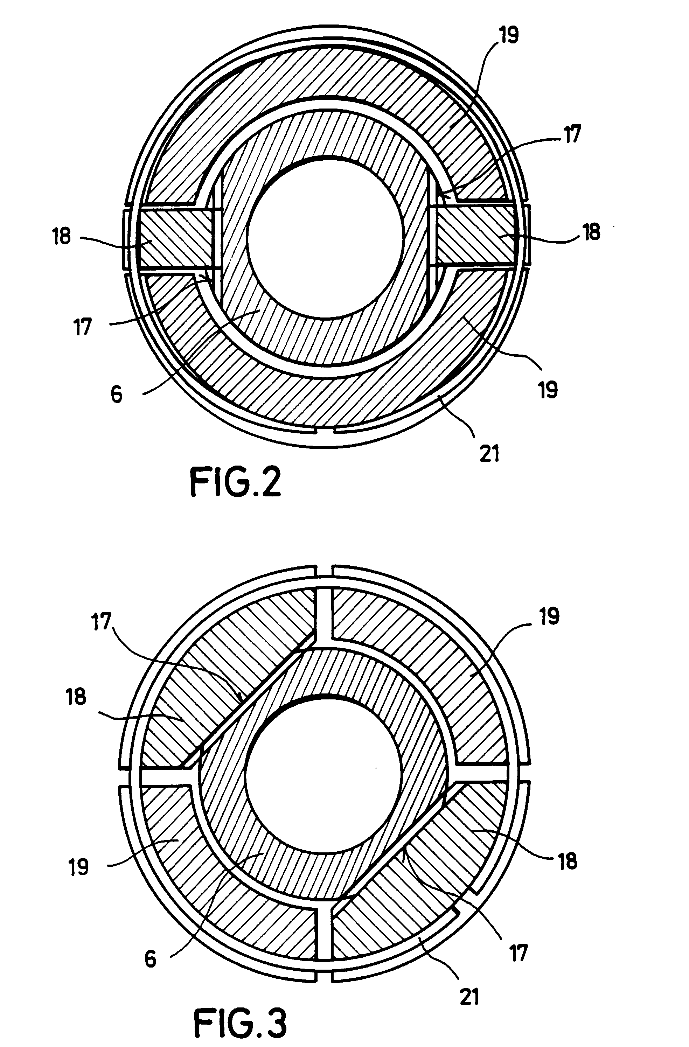

Wie auch besonders gut in den Figuren 2 und 3 zu sehen ist, weist der Kolben 6 in seinem mittleren Bereich mit Rastnasen vesehene Rastflächen 17 auf. Die Rastnasen weisen sägezahnförmige Profilierung auf. Die Rastflächen 17 sind durch zwei parallel zueinander angeordnete Aussparungen in der Mantelfläche des Kolbens 6 gebildet. Im Eingriff mit den Rastflächen 17 stehen ebenfalls mit Rastnasen versehene Rastelemente 18. Die Rastelemente 18 sind Bestandteil eines aus Segmenten 19 bestehenden Ringes. Die Rastelemente 18 und die Segmente 19 weisen an ihrem Umfang U-förmige Aussparungen 20 auf, die zusammen eine umlaufende Ringnut ergeben. In die U-förmigen Aussparungen 20 ist ein geschlitzter Spannring 21 eingelegt. Durch die Federwirkung des geschlitzten Spannringes 21 können die Rastelemente 18 in radialer Richtung bewegt werden.

In den Absatz 4 der Bohrung 3 ist eine Distanzbuchse 22 eingeschoben. Die Rastelemente 13 liegen an der Stirnfläche der Distanzbuchse 22 an. wie in der Figur 1 zu sehen ist, verbleibt zwischen den Rastelementen 18 und dem Grund des Absatzes 4 ein Spalt 23. Die Distanzbuchse 22 ist mit dem Gehäuse 1 lösbar verbunden. Im oberen Bereich der Distanzbuchse 22 befinden sich Dichtungen, die gegen den Außenmantel des Kolbens 6 und der Innenfläche des Absatzes 4 drücken.

Im Gehäuse 1 ist ein Ölbehälter 26 angeordnet, der an einem Ende durch einen Stopfen 27 verschlossen ist. Der Ölbehälter 26 weist einen Zulaufkanal 23 und einen Überlaufkanal 29 auf. Am Ende des Zulaufkanals 28 befindet sich unterhalb des zylindrischen Hohlraums 7 des Kolbens 6 ein Rückstauventil 30. Im Bereich des Überlaufkanals 29 weist die Distanzbuchse 22 am Außendurchmesser eine Durchmesserverringerung und am Innendurchmesser eine Durchmessererweiterung auf. Die Segmente 19 und die Rasterelemente 18 sind an ihrem Außenumfang mit einem Durchmesser versehen, der in etwa dem verringerten Außendurchmesser der Distanzbuchse 22 entspricht.

An dem Gehäuse 1 ist ein Anlenkpunkt 20 für einen Spannhebel 25 schwenkbar angeordnet. An seinem zweiten Ende 31 ist eine Spannrolle 32 außermittig und schwenkbar befestigt. Die Kolbenstange 12 ist an ihrem oberen Ende mit einer Lagerstelle 33 versehen, an der ein Rückstellhebel 34 schwenkbar angelenkt ist. Der Rückstellhebel 34 ist an seinem zweiten Ende 35 beweglich mit der Spannrolle 32 verbunden. Der Spannhebel 25 und der Rückstellhebel 34 sind voneinander beabstandet an der Spannrolle 32 angeordnet. Der Kolben 6 weist an seinem oberen Ende eine an der äußeren Mantelfläche angeordnete Öse 36 auf. Die Öse 36 ist mit dem Spannhebel 25 lösbar verbunden.

Das Gehäuse 1 und der Spannhebel 25 sind jeweils mit einer Haltevorrichtung 37 versehen. In dem in Figur 1 dargestellten Transport- oder Montagezustand der Spannvorrichtung können die beiden Haltevorrichtungen 37 lösbar miteinander verbunden werden. Die Spannrolle 32 drückt gegen ein zu spannendes Zugelement 39, bevorzugt einen Zahnriemen. Da die Ausgestaltung des Spannhebels 25, des Rückstellhebels 34, die Spannrolle 32 und des Zugelementes 39 beliebig sein kann und nur die Anlenkpunkte an der Spannvorrichtung maßgeblich für die Funktionsweise von Bedeutung sind, sind diese Elemente nur in gestrichelter Darstellung gezeichnet.

Im folgenden wird nun die Funktions- und Wirkungsweise des zuvor beschriebenen Ausführungsbeispiels näher erläutert.

Die Spannvorrichtung wird mit seinen Befestigungsstellen 2 in der Regel an einem Motorgehäuse angeordnet. Die Lager des Gehäuses 1 sind durch die Befestigungsstellen 2 genau definiert. Die Spannrolle 32 legt sich hierbei schon leicht an das Zugelement 39 an.

Zur Inbetriebnahme der Spannvorrichtung werden nun die Haltevorrichtungen 37 voneinander gelöst. Die Druckfeder 8 schiebt nun den Kolben 6 in axialer Richtung vor. Hierbei rutschen die Rastelemente 18 an den Rastflächen 17 entlang. Gleichzeitig wird durch die Öse 36 der Spannhebel 25 angehoben. Dabei wird die Spannrolle 32 an das Zugelement 39 mit der entsprechend gewünschten Spannkraft angedrückt. Durch die Hubbewegung des Kolbens 6 und des dabei entstehenden Unterdrucks im zylindrischen Hohlraum 7 wird Öl aus dem Ölbehälter 26 über den Zulaufkanal 28 angesaugt und durch das Rückstellventil 30 unterhalb des Kolbens 6 zugeführt. Die Rastelemente 18 verhaken sich entsprechend mit den Rastflächen 17 in der Gleichgewichtsstellung des Kolbens 6.

Der Anbau der Spannvorrichtung erfolgt normalerweise bei Raumtemperatur, wodurch die Kolbenstange 12 mit ihrem cylindrischen Absatz 13 an dem Dehnstoff-Arbeitselement 10 anliegt. Der Rückstellhebel 34 wird beim Ausfahren des Kolbens 6 entsprechend mit angehoben.

Betrachtet man die Spannvorrichtung nun unter Arbeitsbedingungen, werden über das Zugmittel 39 und das Führungsrad 32 Schwingungen in die Spannvorrichtung eingeleitet. Durch den Spalt 23 ist nunmehr eine axiale Einfederbewegung des Kolbens 6 möglich. Gleichzeitig wird diese Einfederung durch das sich in den Spalten und in dem Hohlraum 7 befindliche Öl gedämpft. Größere Schwingungen oder sogar Stöße, die in die Spannvorrichtung eingeleitet werden, werden durch die Rastelemente 18 und den Boden des Absatzes 4 aufgefangen. Hierdurch ist stets eine Mindestanpreßkraft des Führungsrades 32 an das Zugmittel 39 gegeben. Durch den ungünstigen Anlenkwinkel des Rückstellhebels 34 an die Kolbenstange 12 wird ein Abheben der Aufnahme 14 vom Arbeitskolben 11 durch die Anpreßfeder 14 auf jeden Fall verhindert. Durch das ständige Schwingen des Kolbens im Betriebszustand wird nun fortlaufend Öl im Hydrauliksystem gefördert. Das Öl fließt aus dem zylindrischen Hohlraum in den Spalt zwischen Kolben 6 und Gleithülse 5. Hierdurch wird eine sehr gute Schmierung des Kolbens 6 erreicht. Das Öl fließt weiter in den Spalt 23 und die Öffnungen zwischen Distanzbuchse und Innenfläche des Absatzes 4. Das Öl fließt weiterhin auch in den Zwischenraum von der Distanzbuchse 22 und dem Kolben 6. Im oberen Bereich des Absatzes 4 wird das Öl über Überlaufkanal 29 in den Ölbehälter 26 zurückgeschüttet. Um Wärmeausdehnungen auffangen zu können, ist in dem Ölbehälter 26 eine gewisse Menge Luft gespeichert.

Im Einsatzfall kommt es nun zur Erwärmung der Zugmittel 39 führenden Teile. Hierdurch wird das Zugmittel 39, insbesondere der Zahnriemen, durch seinen niedrigeren Wärmeausdehnungskoeffizienten sehr stark gedehnt. Die Spannung des Zugmittels 39 erhöht sich dadurch. Gleichzeitig erwärmt sich aber auch das Dehnstoff-Arbeitselement, wodurch der Arbeitskolben 11 ausgefahren wird. Der Arbeitskolben 11 kommt nun in der Aufnahme 14 zum Anliegen und drückt die Kolbenstange 12 nach oben. Der Rückstellhebel 34 führt nun eine Bewegung aus, die ein Nachlassen der Spannkraft auf das Zugmittel 39 bewirkt. Das Dehnstoff-Arbeitselement und die Hebelverhältnisse sind so gewählt, daß eine entsprechende Rücknahme der Anpreßkraft in bezug auf die Temperaturerhöhung erfolgt. Die Belastung des Zugmittels 39 bleibt daher auch bei Temperaturerhöhungen nahezu konstant.

Um im Anbau- oder Abbaufall die Spannvorrichtung besser handhaben zu können, ist der Kolben 6 bei gelöster Öse 36 drehbar in der Bohrung 3 gelagert. Bei einer Drehung um ca. 90 ^{o} werden die Rastelemente 18 und die Rastflächen 17 des Kolbens 6 entkoppelt, wodurch der Kolben 6 gegen die Druckfeder 8 eingefahren werden kann. In der Montage- oder Transportstellung, bei der der Kolben 6 ganz eingefahren ist, werden die Rastelemente 18 und die Rastflächen 17 wieder gekoppelt. Danach wird die Öse 36 wieder mit dem Spannhebel 25 verbunden, der zwischenzeitlich durch die Haltevorrichtung 37 am Gehäuse 1 befestigt wurde. In dieser Stellung des Kolbens 6 ist insbesondere der Anbau vereinfacht.

## Patentansprüche

1. Spannvorrichtung für Zugmittel, insbesondere Zahnriemen, mit einem mit Befestigungsstellen (2) versehenen Gehäuse(1), einer Spannrolle (32) mit Laufring und einem temperaturabhängig arbeitenden Ausgleichselement (10), das mit einer Spannrolle (32) in Verbindung steht und temperaturabhängig die Lage der Mittelachse der Spannrolle (32) in und entgegen der Spannrichtung des Zugmittels (39) verändert, wobei in einer Bohrung(3) des Gehäuses (1) ein federgestützter Kolben (6) längsbeweglich geführt ist, der eine Spannkraft auf die Spannrolle (32) zum Andrücken des Laufrings an das Zugmittel (39) ausübt, wobei der Kolben (6) Teil eines Hydraulikdämpfungssystems ist und das Ausgleichselement einseitig am Kolben (6) abgestützt ist,
**dadurch gekennzeichnet,**
daß das Ausgleichselement ein Dehnstoff-Arbeitselement (10) ist, daß ein Ende des Kolbens (6) eine Aufnahme aufweist, die mit einem Spannhebel (25) zwischen dessen Enden gelenkig verbunden ist, daß der Spannhebel (25) mit einem ersten Ende schwenkbar am Gehäuse (1) und mit einem zweiten Ende (31) außermittig, schwenkbar an der Spannrolle (32) angelenkt ist und daß der Kolben (6) an seinem zweiten Ende eine Aufnahme (9) aufweist, in der das Dehnstoff-Arbeitselement (10) angeordnet ist, wobei ein Arbeitskolben (11) des Dehnstoff-Arbeitselements (10) mit einem ersten Ende eines Rückstellhebels (34) gelenkig verbunden ist, und daß das zweite Ende (35) des Rückstellhebels (34) vom Anlenkpunkt (31) des Spannhebels (35) beabstandet an der Spannrolle (32) beweglich angeordnet ist.

2. Spannvorrichtung nach Anspruch 1,
**dadurch gekennzeichnet,**
daß der Kolben (6) an einem Ende durch eine in einem zylindrischen Hohlraum (7) des Kolbens (6) geführten Druckfeder (8) gegenüber dem Gehäuse (1) abgestützt ist.

3. Spannvorrichtung nach Anspruch 1 oder 2,
**dadurch gekennzeichnet,**
daß eine durch Federkraft mit einer Aufnahme (14) auf den Arbeitskolben (11) des Drehstoff-Arbeitselementes (10) aufgesetzte Kolbenstange (12) durch einen zylindrischen Ansatz (13) in der Grundbohrung (9) geführt ist und daß an dem aus dem Kolben (6) hervorstehenden Ende der Kolbenstange (12) das erste Ende des Rückstellhebels (34) angelenkt ist.

4. Spannvorrichtung nach Anspruch 3,
**dadurch gekennzeichnet,**
daß zwischen dem zylindrischen Ansatz (13) und einer Haltebuchse (16), die mit einem Führungsansatz für die Kolbenstange (12) versehen und in der Bohrung(3) des Kolbens (6) gehaltert ist, eine Anpreßfeder (15) für eine Kolbenstange (12) vorgesehen ist, die die Kolbenstange (12) gegen das Dehnstoff-Arbeitselement (10) drückt.

5. Spannvorrichtung nach einem der Ansprüche 1 bis 4,
**dadurch gekennzeichnet,**
daß der Kolben (6) eine an seiner Außenseite angebrachte und mit dem Spannhebel (25) lösbar verbundene Öse (36) aufweist.

6. Spannvorrichtung nach einem der Ansprüche 1 bis 5,
**dadurch gekennzeichnet,**
daß der Spannhebel (25) und das Gehäuse (1) jeweils eine in einer Transportstellung der Spannvorrichtunges miteinander verbindbare Haltevorrichtung (37) aufweisen.

7. Spannvorrichtung nach einem der Ansprüche 2 bis 6,
**dadurch gekennzeichnet,**
daß der Kolben (6) mindestens eine mit Rastnasen versehene Rastfläche (17) am Außenmantel aufweist, in die federgestützte und in der Bohrung (3) gehalterte Rastelemente (18) eingreifen, wobei die Rastelemente (18) das Ausfahren des Kolbens (6) freigeben und das Einfahren sperren.

8. Spannvorrichtung nach Anspruch 7,
**dadurch gekennzeichnet,**
daß die Rastnasen der Rastflächen (17) und der Rastelemente (18) sägezahnförmige Profilierung aufweisen.

9. Spannvorrichtung nach Anspruch 7 oder 8,
**dadurch gekennzeichnet,**
daß die Rastelemente (18) eine am Außenumfang angeordnete und im Querschnitt U-förmige Aussparung (20) aufweisen, in die ein geschlitzter Spannring (21) eingesetzt ist.

10. Spannvorrichtung nach einem der Ansprüche 7 bis 9,
**dadurch gekennzeichnet,**
daß die Rastelemente (18) in einen erweiterten Absatz (4) der Bohrung (3) eingesetzt sind, von der Feder (8) gegen eine Distanzbuchse (22) gedrückt und in Einfederrichtung mit dem Kolben (6) in geringem Maße bewegbar sind.

11. Spannvorrichtung nach einem der Ansprüche 7 bis 10,
**dadurch gekennzeichnet,**
daß bei gelöster Öse (36) des Kolbens (6) die Rastflächen (17) von den Rastflächen (18) durch drehen des Kolbens (6) um ca. 90° entkoppelt sind, und der Kolben (6) in die Transportstellung bringbar ist.

12. Spannvorrichtung mit einem geschlossenen Hydrauliksystem, insbesondere nach einem der Ansprüche 1 bis 11,
**dadurch gekennzeichnet,**
daß das Gehäuse (1) einen geschlossenen Ölbehälter (26) aufweist, der über einen Zulaufkanal j(28) und einen Überlaufkanal (29) mit der Bohrung (3) im Gehäuse (1) verbunden ist.

13. Spannvorrichtung nach Anspruch 12,
**dadurch gekennzeichnet,**
daß im Zulaufkanal (28) ein Ölfluß in die Bohrung (3) ein freigebendes Rückstauventil (30) eingebaut ist und daß die Distanzbuchse (22) mit zur Mantelfläche des Kolbens (6) und Innenwand der Bohrung (3) korrespondierenden und umlaufenden Dichtungen (38) versehen ist.

14. Spannvorrichtung nach Anspruch 12,
**dadurch gekennzeichnet,**
daß das Rückstauventil (30) unterhalb des zylindrischen Hohlraums (7) angeordnet ist.

15. Spannvorrichtung nach einem der Ansprüche 12 bis 14,
**dadurch gekennzeichnet,**
daß im unteren Teil der Bohrung (3) eine Gleithülse (5) eingesetzt ist, in der der Kolben (6) mit einem Ölflußzulassenden radialen Spiel geführt ist.

## Claims

1. Tensioning device for traction means, in particular toothed belts, with a housing (1) provided with fixing points (2), a tensioning roller (32) with thrust ring and a compensating element (10) which operates as a function of temperature and which is connected to a tensioning roller (32) and varies the position of the centre axis of the tensioning roller (32) in and counter to the direction of tensioning the traction means (39) as a function of temperature, wherein in a bore (3) of the housing (1) is guided longitudinally movably a spring-supported piston (6) which exerts a tensioning force on the tensioning roller (32) for biasing the thrust ring against the traction means (39), wherein the piston (6) forms part of a hydraulic damping system and the compensating element is supported on one side on the piston (6), characterised in that the compensating element is a working element (10) of thermosensitive material, in that one end of the piston (6) comprises a receptacle which is pivotably connected to a tensioning lever (25) between the ends thereof, in that the tensioning lever (25) is linked by a first end pivotably to the housing (1) and by a second end (31) eccentrically and pivotably to the tensioning roller (32), and in that the piston (6) at its second end comprises a receptacle (9) in which is arranged the working element (10) of thermosensitive material, wherein a working piston (11) of the working element (10) of thermosensitive material is pivotably connected to a first end of a return lever (34), and in that the second end (35) of the return lever (34) is arranged movably on the tensioning roller (32) at a distance from the linkage point (31) of the tensioning lever (35).

2. Tensioning device according to claim 1, characterised in that the piston (6) is supported at one end relative to the housing (1) by a compression spring (8) guided in a cylindrical cavity (7) of the piston (6).

3. Tensioning device according to claim 1 or 2, characterised in that a piston rod (12) mounted by spring force with a receptacle (14) on the working piston (11) of the working element (10) of thermosensitive material is guided by a cylindrical attachment (13) in the main bore (9) and in that the first end of the return lever (34) is linked to the end of the piston rod (12) protruding from the piston (6).

4. Tensioning device according to claim 3, characterised in that between the cylindrical attachment (13) and a holding bush (16), which is provided with a guide attachment for the piston rod (12) and mounted in the bore (3) of the piston (6), is provided a pressure spring (15) for a piston rod (12), which biases the piston rod (12) towards the working element (10) of thermosensitive material.

5. Tensioning device according to any of claims 1 to 4, characterised in that the piston (6) comprises an eye (36) mounted on its outer side and releasably connected to the tensioning lever (25).

6. Tensioning device according to any of claims 1 to 5, characterised in that the tensioning lever (25) and the housing (1) comprise in each case a holding device (37) which can be connected to each other in a transport position of the tensioning device.

7. Tensioning device according to any of claims 2 to 6, characterised in that the piston (6) comprises at least one latching surface (17) provided with latching projections on the outer peripheral wall, in which engage spring-supported latching elements (18) mounted in the bore (3), wherein the latching elements (18) allow extension of the piston (6) and block retraction.

8. Tensioning device according to claim 7, characterised in that the latching projections of the latching surfaces (17) and of the latching elements (18) comprise sawtooth-like profiling.

9. Tensioning device according to claim 7 or 8, characterised in that the latching elements (18) comprise a recess (20) of U-shaped cross-section which is arranged at the outer circumference and in which is inserted a slotted tensioning ring (21).

10. Tensioning device according to any of claims 7 to 9, characterised in that the latching elements (18) are inserted in a wider shoulder (4) of the bore (3), biased by the spring (8) towards a distance bush (22) and movable to a minor extent in the direction of inward deflection with the piston (6).

11. Tensioning device according to any of claims 7 to 10, characterised in that when the eye (36) of the piston (6) is released, the latching surfaces (17) are uncoupled from the latching surfaces (18) by rotation of the piston (6) through about 90°, and the piston (6) can be moved into the transport position.

12. Tensioning device with a closed hydraulic system, in particular according to any of claims 1 to 11, characterised in that the housing (1) comprises a closed oil container (26) which is connected by an inlet channel (28) and an overflow channel (29) to the bore (3) in the housing (1).

13. Tensioning device according to ciaim 12, characterised in that in the inlet channel (28) is installed a backpressure valve (30) allowing oil flow into the bore (3) and in that the distance bush (22) is provided with peripheral seals (38) matching the peripheral surface of the piston (6) and inner wall of the bore (3).

14. Tensioning device according to claim 12, characterised in that the backpressure valve (30) is arranged below the cylindrical cavity (7).

15. Tensioning device according to any of claims 12 to 14, characterised in that in the lower portion of the bore (3) is inserted a sliding sleeve (5) in which the piston (6) is guided with a radial clearance allowing oil flow.

## Revendications

1. Dispositif tendeur pour moyens d'entraînement, en particulier pour courroies crantées, comprenant un boîtier (1) pourvu de points de fixation (2), un galet tendeur (32) comprenant une bague de roulement, et un élément compensateur (10) travaillant de façon sensible à la température, relié au galet tendeur (32) et modifiant en fonction la température la position de l'axe central du galet tendeur (32) dans le sens de la tension des moyens d'entraînement (39) et à l'encontre de ce sens, un piston (6) soutenu par un ressort, en étant guidé de façon mobile dans le sens longitudinal à l'intérieur d'un alésage (3) du boîtier (1) et en exerçant une force de tension sur le galet tendeur (32) de manière à forcer la bague de roulement de celui-ci contre les moyens d'entraînement (39), le piston (6) faisant partie d'un système amortisseur hydraulique, et l'élément compensateur prenant appui unilatéralement sur le piston (6),
caractérisé en ce que l'élément compensateur est un élément de travail (10) par dilatation, en ce qu'une extrémité du piston (6) comporte un support qui est articulé de façon pivotante sur un levier tendeur (25) à un endroit compris entre les extrémités de celui-ci, en ce qu'une première extrémité du levier tendeur (25) est articulée de façon oscillante sur le boîtier (1) et que l'autre extrémité (31) est articulée de façon pivotante et excentrée sur le galet tendeur (32), et en ce que la seconde extrémité du piston (6) comporte un alésage récepteur (9), dans lequel est logé l'élément de travail (10) par dilatation, un piston de travail (11) de l'élément de travail (10) par dilatation étant articulé sur une première extrémité d'un levier de rappel (34), et en ce que la seconde extrémité (35) du levier de rappel (34) est articulée sur le galet tendeur (32), à distance du point d'articulation (31) du levier tendeur (25).

2. Dispositif tendeur selon la revendication 1, caractérisé en ce que l'une des extrémités du piston (6) s'appuie sur le boîtier (1) par l'intermédiaire d'un ressort de pression (8) guidé dans une cavité cylindrique (7) du piston (6).

3. Dispositif tendeur selon la revendication 1 ou 2, caractérisé en ce qu'une tige de piston (12) emboîtée, par sa cavité réceptrice (14), sur le piston de travail (11) de l'élément de travail (10) par dilatation, sous l'action d'une force de ressort, est guidée dans l'alésage récepeur (9) par une extension cylindrique (13), et en ce que la première extrémité du levier de rappel (34) est articulée sur l'extrémité de la tige de piston (12), qui fait saillie hors du piston (6).

4. Dispositif tendeur selon la revendication 3, caractérisé en ce qu'un ressort d'appui (15) pour la tige de piston (12) est prévu entre l'extension cylindrique (13) et une douille de maintien (16), pourvue d'un appendice de guidage de la tige de piston (12) et maintenue dans l'alésage récepteur (9) du piston (6), ce ressort repoussant la tige de piston (12) en appui sur l'élément de travail (10) par dilatation.

5. Dispositif tendeur selon l'une des revendications 1 à 4, caractérisé en ce que le piston (6) comporte une oreille (36) aménagée sur le côté extérieur du piston et relié, de façon démontable, au levier tendeur (25).

6. Dispositif tendeur selon l'une des revendications 1 à 5, caractérisé en ce que le levier tendeur (25) et le boîtier (1) comportent chacun un dispositif de calage (37) permettant de les relier l'un à l'autre dans une position de transport du dispositif tendeur.

7. Dispositif tendeur selon l'une des revendications 2 à 6, caractérisé en ce que le piston (6) comporte, sur son enveloppe extérieure, au moins une surface d'arrêt (17) pourvue de crans d'arrêt, dans lesquels s'engagent des éléments d'arrêt (18) rappelés par ressort, logés dans l'alésage (3), les éléments d'arrêt (18) autorisant la sortie du piston (6) et interdisant la rentrée de celui-ci.

8. Dispositif tendeur selon la revendication 7, caractérisé en ce que les crans d'arrêt des surfaces d'arrêt (17) et les éléments d'arrêt (18) présentent chacun un profil en dents de scie.

9. Dispositif tendeur selon la revendication 7 ou 8, caractérisé en ce que le éléments d'arrêt (18) comportent un évidement (20) ménagé dans la périphérie extérieure de ceux-ci, ayant une section en U, dans lequel est inséré un anneau élastique fendu (21).

10. Dispositif tendeur selon l'une des revendications 7 à 9, caractérisé en ce que les éléments d'arrêt (18) sont installés dans une section élargie (4) de l'alésage (3), sont forcés contre une douille entretoise (22) par le ressort (8), et sont agencés de manière à pouvoir être déplacés avec le piston (6), sur une petite distance, dans le sens de la compression du ressort.

11. Dispositif tendeur selon l'une des revendications 7 à 10, caractérisé en ce que, lorsque l'oreille (36) du piston (6) est libre, les surfaces d'arrêt (17) peuvent être dégagées des éléments d'arrêt (18) en imprimant au piston (6) une rotation de 90° environ, et en ce que le piston (6) peut ainsi être amené en position de transport.

12. Dispositif tendeur, en particulier selon l'une des revendications 1 à 11, comprenant un système hydraulique fermé, caractérisé en ce que le boîtier (1) comporte un réservoir d'huile fermé (26), qui est relié à l'alésage (3) ménagé dans le boîtier (1) par l'intermédiaire d'un canal d'admission (28) et d'un canal de décharge (29).

13. Dispositif tendeur selon la revendication 12, caractérisé en ce qu'un clapet de retenue (30) autorisant un écoulement d'huile vers l'alésage (3) est installé dans le canal d'admission (28), et en ce que la douille entretoise (22) est pourvue de joints d'étanchéité circonférentiels (38) coopérant avec la surface enveloppante du piston (6) et la paroi intérieure de l'alésage (3).

14. Dispositif tendeur selon la revendication 12, caractérisé en ce que le clapet de retenue (30) est disposé en dessous de la cavité cylindrique (7).

15. Dispositif selon l'une des revendications 12 à 14, caractérisé en ce qu'une chemise de coulissement (5) est insérée dans la partie inférieure de l'alésage (3), chemise dans laquelle le piston (6) est guidé en conservant un jeu radial autorisant un passage d'huile.
